# EUROPEAN PATENT APPLICATION

(11) **EP 4 589 351 A1**
(43) Date of publication of application: **23.07.2025**
(21) Application number: 23865337.2
(22) Date of filing: 01.09.2023
(51) Int. Cl.: G02B 6/126, G02B 6/12, G02B 6/122, G02B 6/125

(54) **OPTICAL INTEGRATED CIRCUIT ELEMENT**

(30) Priority: 16.09.2022 JP 2022148604; 20.12.2022 JP 2022203751
(71) Applicant: Kyocera Corporation, Kyoto-shi, Kyoto 612-8501 (JP)
(72) Inventor: MATSUI Naoki, Kyoto-shi, Kyoto 612-8501 (JP)
(74) Representative: Viering, Jentschura & Partner mbB Patent- und Rechtsanwälte
(86) International application number: PCT/JP2023/032144
(87) International publication number: WO 2024/057982

(57) **Abstract**

An optical integrated circuit element includes a first waveguide and a second waveguide. At least part of the first waveguide and at least part of the second waveguide are positioned alongside each other along a first direction. The first waveguide includes a first port configured to allow input or output of electromagnetic waves that include a first polarization and a second polarization, and a second port configured to allow output of the first polarization that has been separated or input of the first polarization. The second waveguide may include a third port configured to allow output of the second polarization that has been separated or the second polarization that has been separated and rotated, or input of the second polarization. A cross-sectional shape, a normal to which is the first direction, of at least one of the first waveguide or the second waveguide does not have linear symmetry.

## Description

### CROSS-REFERENCE TO RELATED APPLICATIONS

This application claims priority of Japanese Patent Application No. 2022-148604 (filed September 16, 2022) and Japanese Patent Application No. 2022-203751 (filed December 20, 2022), the entire disclosures of which are hereby incorporated by reference.

### TECHNICAL FIELD

The present disclosure relates to an optical integrated circuit element.

### BACKGROUND OF INVENTION

A known element achieves separation and rotation of polarizations by using a combination of a mode converter that performs conversion from a TM0 mode to a TE1 mode and a directional coupler (see, for example, Patent Literature 1).

### CITATION LIST

### PATENT LITERATURE

Patent Literature 1: Japanese Unexamined Patent Application Publication (Translation of PCT Application) No. 2017-536572

### SUMMARY

In an embodiment of the present disclosure, an optical integrated circuit element includes a first waveguide and a second waveguide. At least part of the first waveguide and at least part of the second waveguide are positioned alongside each other along a first direction. The first waveguide includes a first port configured to allow input or output of electromagnetic waves that include a first polarization and a second polarization, and a second port configured to allow output of the first polarization that has been separated or input of the first polarization. The second waveguide includes a third port configured to allow output of the second polarization that has been separated or the second polarization that has been separated and rotated, or input of the second polarization. A cross-sectional shape, a normal to which is the first direction, of at least one of the first waveguide or the second waveguide does not have linear symmetry.

### BRIEF DESCRIPTION OF THE DRAWINGS

FIG. 1 is a block diagram illustrating an example configuration of an optical receiver according to an embodiment.
FIG. 2 is a block diagram illustrating another example configuration of an optical receiver.
FIG. 3 is a block diagram illustrating an example configuration of an optical receiver obtained when a polarization splitter rotator is replaced with a polarization splitter in the example configuration in FIG. 2.
FIG. 4 is a block diagram illustrating an example configuration of an optical receiver obtained when delayers connected before photodiodes in the example configuration in FIG. 2 are replaced with variable attenuators.
FIG. 5 is a block diagram illustrating an example configuration of an optical receiver obtained by further providing delayers between photodiodes and variable attenuators connected before the photodiodes in the example configuration in FIG. 4.
FIG. 6 is a plan view illustrating an example configuration of a polarization splitter rotator according to an embodiment.
FIG. 7 is a sectional view taken along line B-B in FIG. 6.
FIG. 8 is a sectional view taken along line C-C in FIG. 6.
FIG. 9 is a sectional view taken along line D-D in FIG. 6.
FIG. 10 is a sectional view taken along line E-E in FIG. 6.
FIG. 11 is a sectional view taken along line F-F in FIG. 6.
FIG. 12 is a graph illustrating simulation results for output characteristics of a polarization splitter rotator according to an embodiment.
FIG. 13 is a graph illustrating measurement results for output characteristics of a polarization splitter rotator according to an embodiment.
FIG. 14 is a plan view illustrating another example configuration of a polarization splitter rotator.
FIG. 15 is a sectional view taken along line G-G in FIG. 14.
FIG. 16 is a sectional view taken along line H-H in FIG. 14.

### DESCRIPTION OF EMBODIMENTS

In an element that is a combination of two elements, namely, a mode converter and a directional coupler, performance may deteriorate due to manufacturing errors in at least one of the elements. In other words, the element is not robust against manufacturing errors. Therefore, when an element is created by combining two elements using a 0.18 µm (180 nm) process, which is considered to allow elements to be manufactured more easily from a technological viewpoint and incurs a lower manufacturing cost compared to state-of-the-art processes, controlling the characteristics of the elements is difficult. In addition, controlling the characteristics of directional couplers having asymmetrical structures is difficult when the directional couplers are created using a 0.18 µm process. According to the present disclosure, an optical integrated circuit element whose characteristics are easy to control even when created using a 0.18 µm process can be provided.

Direct-modulation direct-detection methods are widely used in optical communication in data centers due to the convenience and low power consumption of digital signal processors. On the other hand, as the amount of optical communication traffic in data centers increases, higher-density data transmission is required, and optical transceivers including silicon-based optical integrated circuits, in particular, compact wavelength multiplexing optical circuits, are being considered. In this case, a series Mach-Zehnder interference system or arrayed waveguide gratings can be used as wavelength multiplexing optical circuits realized using silicon. All of these wavelength multiplexing optical circuits are characterized by the fact that their characteristics vary greatly depending on the polarization of light. On the other hand, single-mode optical fibers are widely used in existing optical fiber networks in data centers. However, this type of optical fiber does not have a characteristic of maintaining the polarization. Therefore, the polarization of light changes randomly each time light passes through curved portions or connecting portions of wiring. Therefore, in order to ensure that the characteristics of an optical receiver are uniform regardless of the polarization, a polarization splitter rotator needs to be provided in a former stage of an optical circuit, and the incident light needs to be split into TE (transverse electric) and TM (transverse magnetic) components, and each of these components needs to be input into a separate wavelength multiplexing optical circuit. In a direct-modulation direct-polarization method, after the light is polarized to either TE or TM, the outputs of wavelength multiplexing optical circuits are received by photodiodes and the sums of the outputs of the photodiodes corresponding to the respective polarization components need to be detected.

In an element that is a combination of two elements, namely, a mode converter and a directional coupler, performance may deteriorate due to manufacturing errors in at least one of the elements. In other words, the element is not robust against manufacturing errors. Therefore, when an element is created by combining two elements using a 0.18 µm (180 nm) process, which allows elements to be more easily manufactured from a technological point of view and incurs a lower manufacturing cost compared to state-of-the-art processes, controlling the characteristics of the elements is difficult. In addition, controlling the characteristics of directional couplers having asymmetrical structures is difficult when the directional couplers are created using a 0.18 µm process. When created using a 0.18 µm process, a structure that allows the characteristics to be controlled is required.

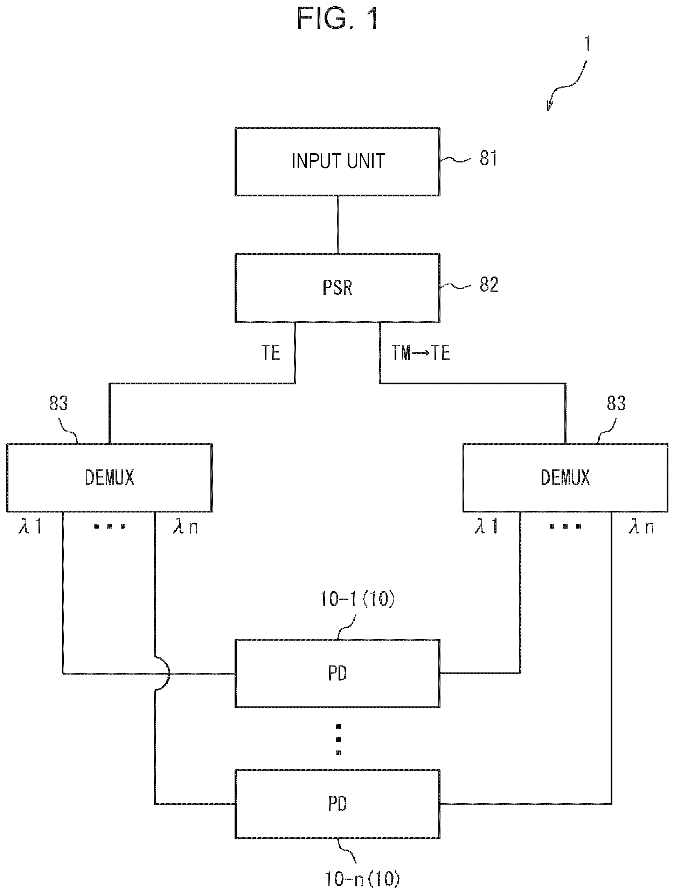

In an embodiment of the present disclosure, an optical receiver 1 (see FIG. 1 etc.) may be used in combination with a configuration for transmitting optical signals in an optical communication system. The configuration for transmitting optical signals may include a light source and a modulator.

The light source may include a semiconductor laser such as an LD (laser diode) or a VCSEL (vertical cavity surface emitting laser). The light source may include a device that emits electromagnetic waves of various wavelengths, not limited to visible light. The modulator modulates electromagnetic waves by changing the intensity of the electromagnetic waves. The modulator may pulse modulate the electromagnetic waves, for example.

The configuration for transmitting optical signals may further include a signal input unit. The signal input unit accepts input of signals from external devices, etc. The signal input unit may include a D/A converter, for example. The signal input unit outputs a signal to a modulator. The modulator modulates electromagnetic waves based on a signal acquired by the signal input unit.

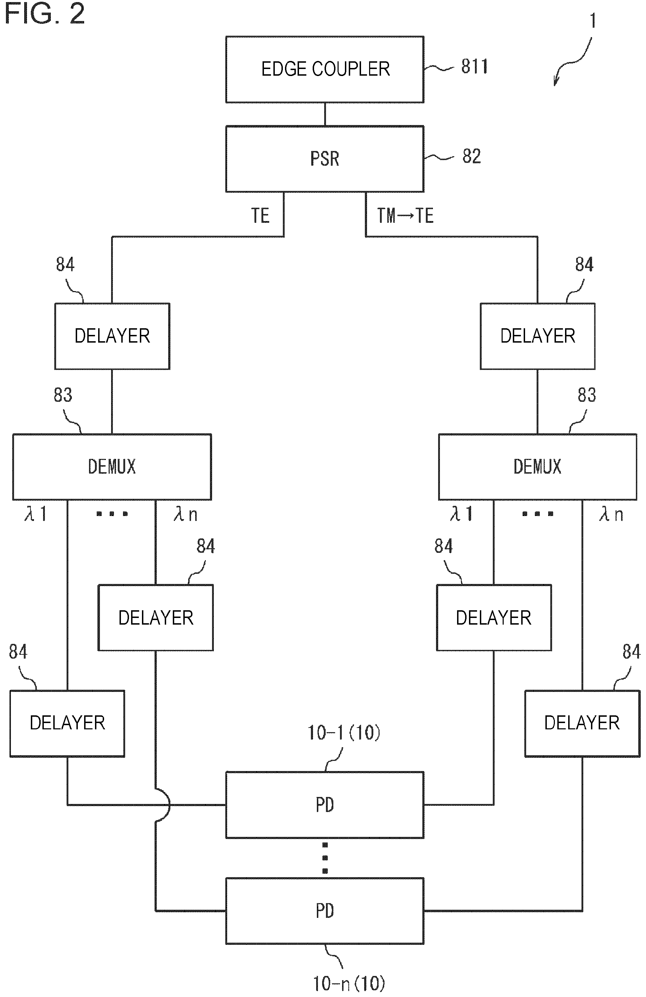

As illustrated in FIG. 2, the optical receiver 1 may further include delayers 84 between a polarization splitter rotator 82 and each of two demultiplexers 83, and between the demultiplexers 83 and each of n photodiodes 10-1 to n. The delayers 84 delay the propagation of optical signals. The optical receiver 1 compensates for variations between the delays in the optical signals caused by manufacturing errors in the waveguides using the delayers 84. As a result of the optical receiver 1 including the delayers 84, jitter of combined signals consisting of a TE-mode optical signal and a TE-mode optical signal converted from the TM-mode optical signal output from the photodiodes 10 can be reduced.

The delayers 84 may be, for example, configured as waveguides having a prescribed length, and the effective refractive index of the waveguides may be adjustable using a heater. The delayers 84 may be configured as phase modulators having a prescribed length and may be configured so that the amount of phase modulation can be adjusted by applying a voltage.

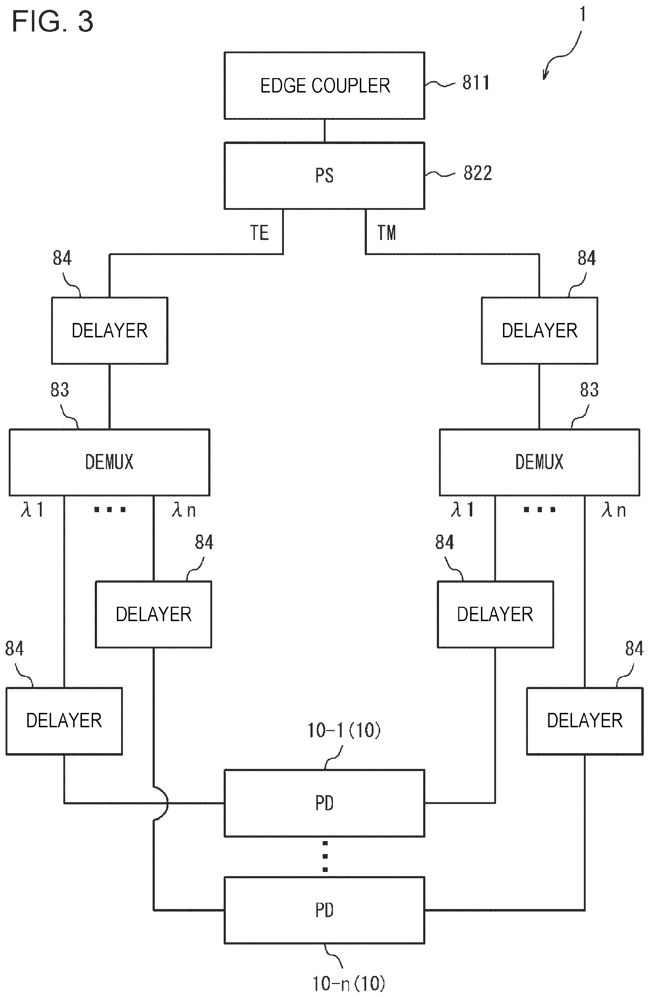

As illustrated in FIG. 3, the polarization splitter rotator 82 in the optical receiver 1 may be replaced with a polarization splitter (PS) 822. The polarization splitter 822 splits an input optical signal into a TE-mode optical signal and a TM-mode optical signal. The TE-mode optical signal and the TM-mode optical signal have different propagation speeds from each other. The optical receiver 1 may include the delayers 84 to compensate for differences in delay between the TE-mode optical signal and the TM-mode optical signal.

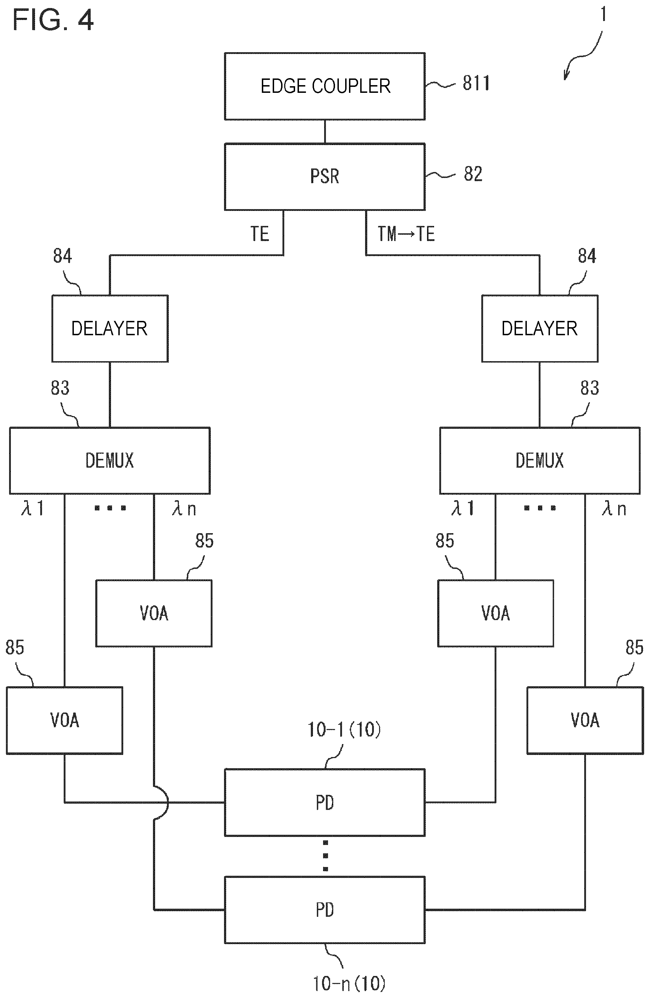

As illustrated in FIG. 4, the delayers 84 connected between the demultiplexers 83 and each of the n photodiodes 10-1 to n in the optical receiver 1 illustrated in FIG. 2 may be replaced with variable optical attenuators (VOAs) 85. The variable optical attenuators 85 may include silicon pin diodes, for example. The variable optical attenuators 85 absorb light and attenuate light intensity in response to being injected with a current. By adjusting the current injected into each variable optical attenuator 85, the optical loss that occurs in the polarization splitter rotator 82 or the demultiplexer 83 can be compensated for. Therefore, even if optical loss in the polarization splitter rotator 82 or the demultiplexers 83 is not uniform due to differences in the polarization or wavelength of the optical signals, the light-reception sensitivity of optical signals with any polarization or wavelength can be made to approach uniformity by decreasing the current values of the variable optical attenuators 85 through which optical signals having high optical loss pass and increasing the current values of the variable optical attenuators 85 through which optical signals having low optical loss pass.

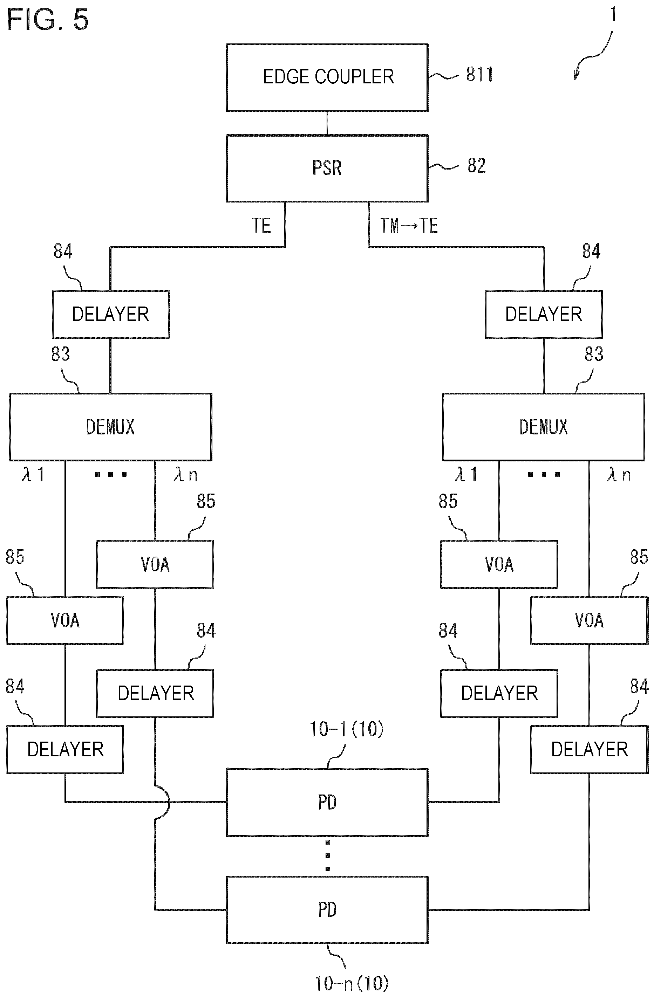

As illustrated in FIG. 5, the optical receiver 1 may include both variable optical attenuators 85 and delayers 84 between the demultiplexers 83 and each of the n photodiodes 10-1 to n.

As described above, in this embodiment, the optical receiver 1 can detect an optical signal using the photodiodes 10 configured to reduce return light. Optical signals returning to the input unit 81 can be reduced as a result of the return light being reduced. Stable operation of a light source or modulator that transmits an optical signal to the input unit 81 can be maintained by reducing optical signals returning to the input unit 81. As a result, the reliability of an optical communication system using the optical receiver 1 can be improved.

### <Optical Detection Devices>

In the present disclosure, the photodiodes 10 are used as optical detection devices that detect optical signals. As optical detection devices, other light-receiving elements such as phototransistors may be used instead of the photodiodes 10. Even when other light-receiving elements are used as optical detection devices, the reliability of optical communication systems can be improved by employing a configuration so that the amount of return light is reduced.

### (Example Configuration of Polarization Splitter Rotator 82)

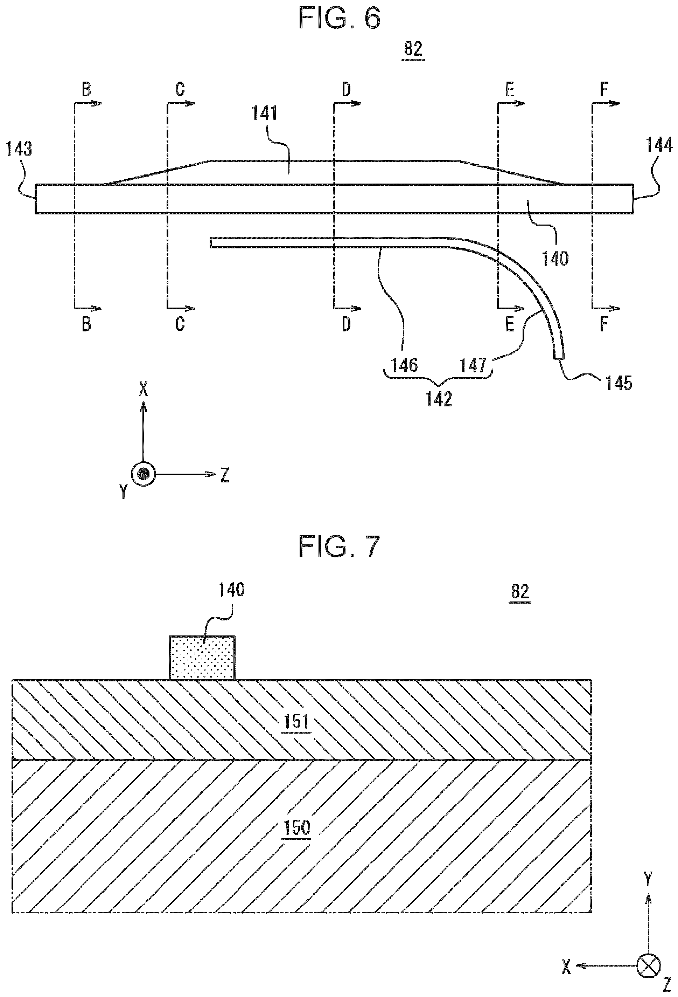

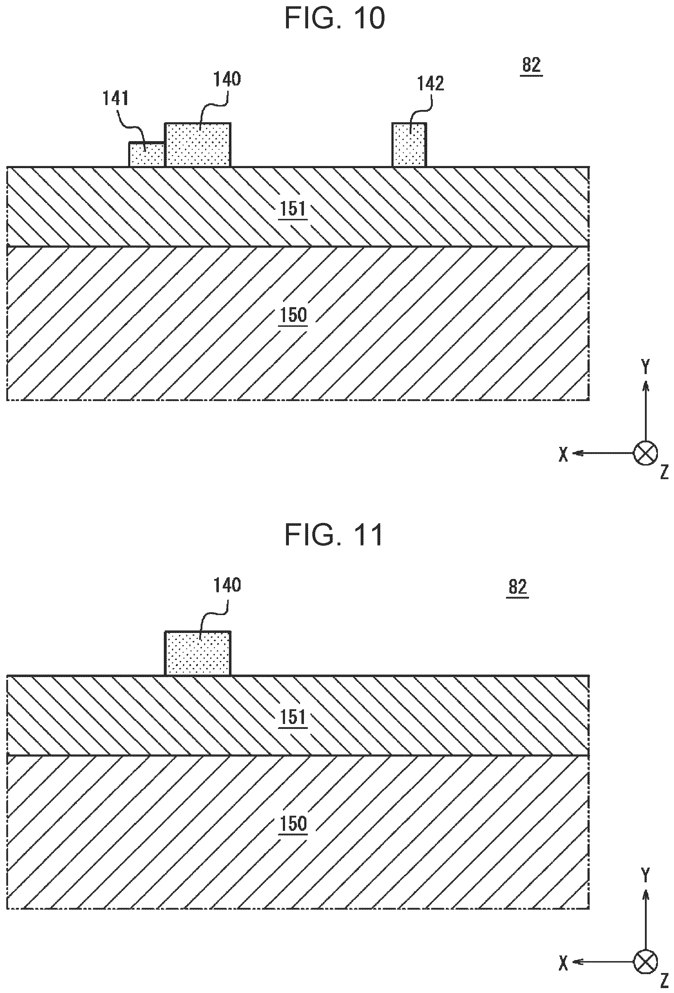

As illustrated in FIG. 6, as well as FIGs. 7, 8, 9, 10, and 11, the polarization splitter rotator 82 according to an embodiment includes a first waveguide 140 and a second waveguide 142. The first waveguide 140 and the second waveguide 142 are assumed to be formed on an insulating layer 151 of a substrate 150. The substrate 150 may be composed of various materials such as silicon. The insulating layer 151 may be composed of various materials such as silicon dioxide. At least part of each of the first waveguide 140 and the second waveguide 142 extends in a first direction (Z-axis direction). At least part of the first waveguide 140 and at least part of the second waveguide 142 may be positioned parallel to each other.

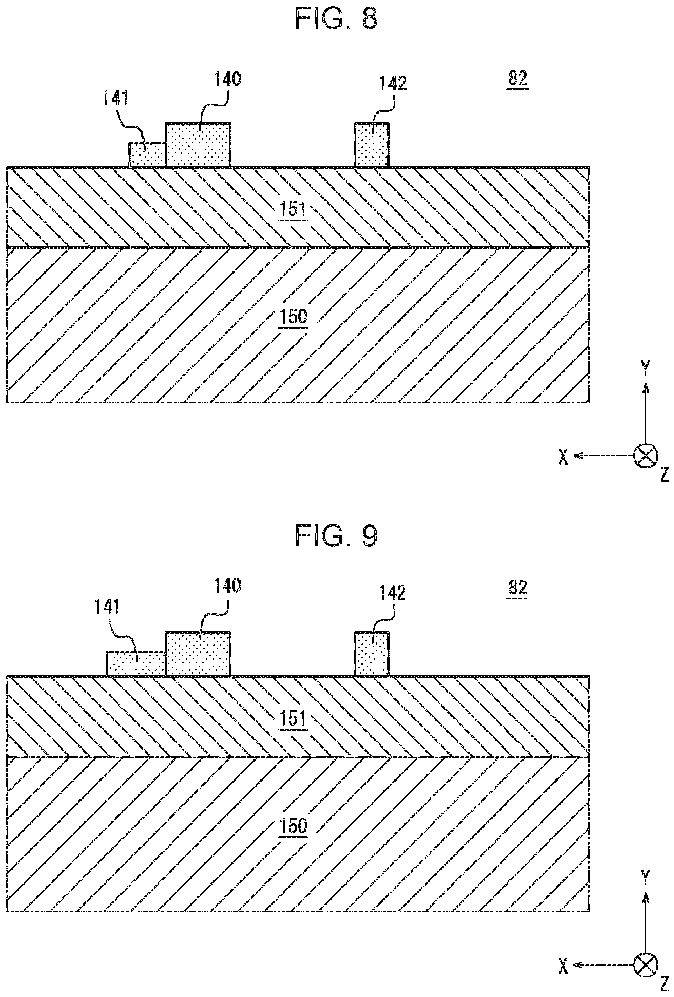

The first waveguide 140 includes an asymmetrical part 141 that is asymmetrical in a cross-section, a normal to which is the first direction (Z-axis direction), as illustrated in FIGS. 8, 9 and 10. In addition, the first waveguide 140 does not have linear symmetry with respect to a normal to the surface of the substrate 50 in a cross-section to which a normal is the first direction. In this embodiment, the cross-sectional shape of the first waveguide 140 is asymmetrical, but the cross-sectional shape of the second waveguide 142 may be asymmetrical. The cross-sectional shape of at least one of the first waveguide 140 or the second waveguide 142 may be asymmetrical.

The first waveguide 140 includes a first port 143 at the end of the first waveguide 140 on the negative direction side of the Z-axis, and a second port 144 at the end of the first waveguide 140 on the positive direction side of the Z-axis, i.e., the end on the opposite side from the first port 143.

The second waveguide 142 includes a first part 146 that is positioned along the first waveguide 140 and a second part 147 that becomes increasingly separated from the first waveguide 140 as one moves in the positive direction of the Z-axis. The second part 147 may be configured in a curved shape, or may be configured in a straight line shape that is inclined with respect to the direction in which the first waveguide 140 extends. The second part 147 is positioned further toward the positive direction side of the Z axis than the first part 146 is. The second part 147 includes a third port 145 at the end of the second part 147 on the opposite side from the side of the second part 147 that is connected to the first part 146.

The first port 143 of the first waveguide 140 may be configured to allow input of electromagnetic waves. The second port 144 may be configured to allow output of electromagnetic waves. The third port of the second waveguide 142 may be configured to allow output of electromagnetic waves. The electromagnetic waves input to the first port 143 travel along the first waveguide 140 in the positive direction of the Z-axis. At least part of the electromagnetic waves traveling along the first waveguide 140 is transferred to the second waveguide 142. The electromagnetic waves that remain in the first waveguide 140 travel to the second port 144 and are output from the second port 144. The electromagnetic waves that remain in the second waveguide 142 travel to the third port 145 and are output from the third port 145.

The second port 144 of the first waveguide 140 may be configured to allow input of electromagnetic waves. The third port 145 of the second waveguide 142 may be configured to allow input of electromagnetic waves. The first port 143 of the first waveguide 140 may be configured to allow output of electromagnetic waves. Electromagnetic waves input to the second port 144 travel along the first waveguide 140 in the negative direction of the Z-axis. On the other hand, electromagnetic waves input to the third port 145 travel through the first part 146 of the second waveguide 142 in the negative direction of the Z-axis and then are transferred to the first waveguide 140. As a result, in the first waveguide 140, the combined electromagnetic waves, which are the sum of the electromagnetic waves input to the second port 144 and the electromagnetic waves input to the third port 145, travel in the negative direction of the Z-axis. The combined electromagnetic waves travel to the first port 143 and are output from the first port 143.

In this case, the first waveguide 140 and the second waveguide 142 may be configured to separate a first polarization and a second polarization and to output the first polarization from the second port 144 and the second polarization from the third port 145 when electromagnetic waves including the first polarization and the second polarization are input to the first port 143. Conversely, the first waveguide 140 and the second waveguide 142 may be configured to output electromagnetic waves obtained by combining the respective polarizations from the first port 143 when electromagnetic waves of the first polarization are input to the second port 144 and electromagnetic waves of the second polarization are input to the third port 145. The above-described configuration can be realized, for example, by designing the shape of the asymmetrical part 141 of the first waveguide 140 or the length or spacing etc. of the parts where the first waveguide 140 and the second waveguide 142 are positioned alongside each other, as appropriate. In this embodiment, the first polarization is assumed to be the TE-mode polarization. The second polarization is assumed to be the TM-mode polarization.

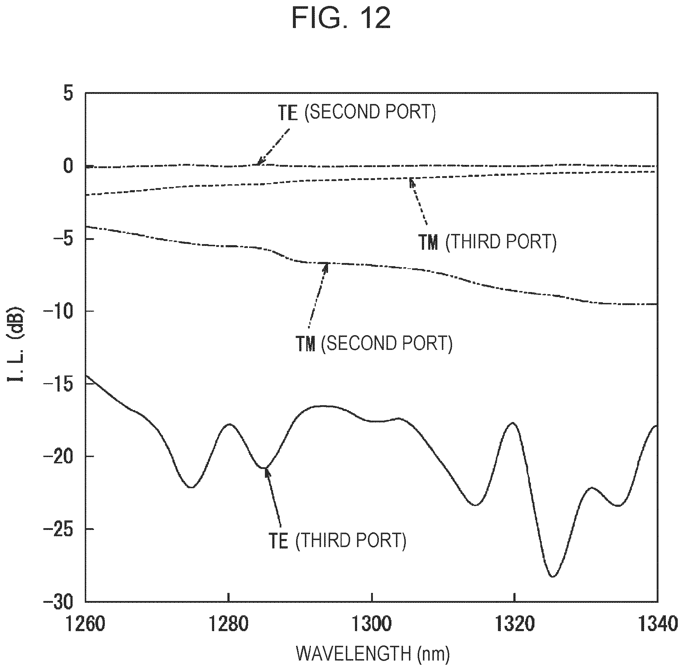

FIG. 12 illustrates the results of a simulation of the characteristics of the polarization splitter rotator 82 according to this embodiment. In the graph in FIG. 12, the horizontal axis represents wavelength. The units of wavelength are nm (nanometers). The vertical axis represents connection loss (insertion loss IL). The units of connection loss are assumed to be dB (decibels). In the simulation, electromagnetic waves including the TE-mode polarization and the TM-mode polarization are input to the first port 143. The TE-mode polarization component output from the second port 144 is illustrated by a single-dot dashed line. The TM-mode polarization component output from the second port 144 is illustrated by a two-dot dashed line. The TE-mode polarization component output from the third port 145 is illustrated by a solid line. The TM-mode polarization component output from the third port 145 is illustrated by a dashed line. As illustrated in FIG. 12, the electromagnetic waves output from the second port 144 contain a large amount of TE-mode polarization. The electromagnetic waves output from the third port 145 contain a large amount of TM-mode polarization. In other words, according to the simulation, the polarization splitter rotator 82 according to this embodiment can separate the TE-mode polarization and the TM-mode polarization.

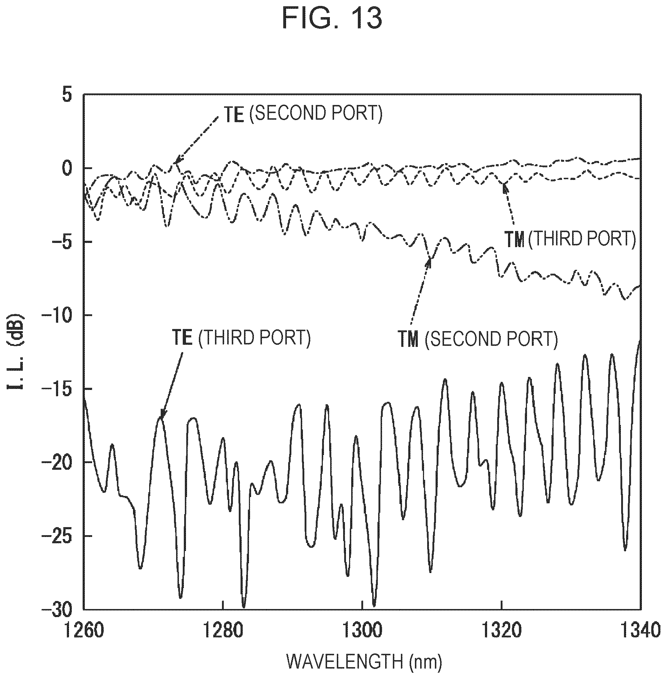

FIG. 13 illustrates the results of measuring the characteristics of the polarization splitter rotator 82 according to this embodiment. In the graph in FIG. 13, the horizontal axis represents wavelength. The units of wavelength are nm (nanometers). The vertical axis represents connection loss (insertion loss IL). The units of connection loss are assumed to be dB (decibels). When making the measurements, electromagnetic waves including the TE-mode polarization and the TM-mode polarization are input to the first port 143. The measured values of TE-mode polarization component output from the second port 144 are illustrated by a single-dot dashed line. The measured values of TM-mode polarization component output from the second port 144 are illustrated by a two-dot dashed line. The measured values of the TE-mode polarization component output from the third port 145 are illustrated by a solid line. The measured values of the TM-mode polarization component output from the third port 145 are illustrated by a dashed line. As illustrated in FIG. 13, the electromagnetic waves output from the second port 144 contain a large amount of TE-mode polarization. The electromagnetic waves output from the third port 145 contain a large amount of TM-mode polarization. In other words, according to the measurement results as well, the polarization splitter rotator 82 according to this embodiment can separate the TE-mode polarization and the TM-mode polarization.

In this embodiment, the polarization splitter rotator 82 may include the first waveguide 140 and the second waveguide 142. At least part of the first waveguide 140 and at least part of the second waveguide 142 may be positioned alongside each other along the first direction (the Z-axis direction in FIG. 6). The first waveguide 140 may include a first port configured to allow input or output of electromagnetic waves including a first polarization (for example, TE-mode polarization) and a second polarization (for example, TM-mode polarization), and a second port configured to allow output of the first polarization, which has been separated, or input of the first polarization. The second waveguide 142 may include a third port configured to allow output of the second polarization that has been separated or the second polarization that has been separated and rotated, or input of the second polarization. A cross-sectional shape, a normal to which is the first direction (Z-axis direction in FIG. 6), of at least one of the first waveguide 140 or the second waveguide 142 does not need to have linear symmetry. A cross-sectional shape, a normal to which is the first direction (Z-axis direction in FIG. 6), of the first waveguide 140 may be asymmetrical.

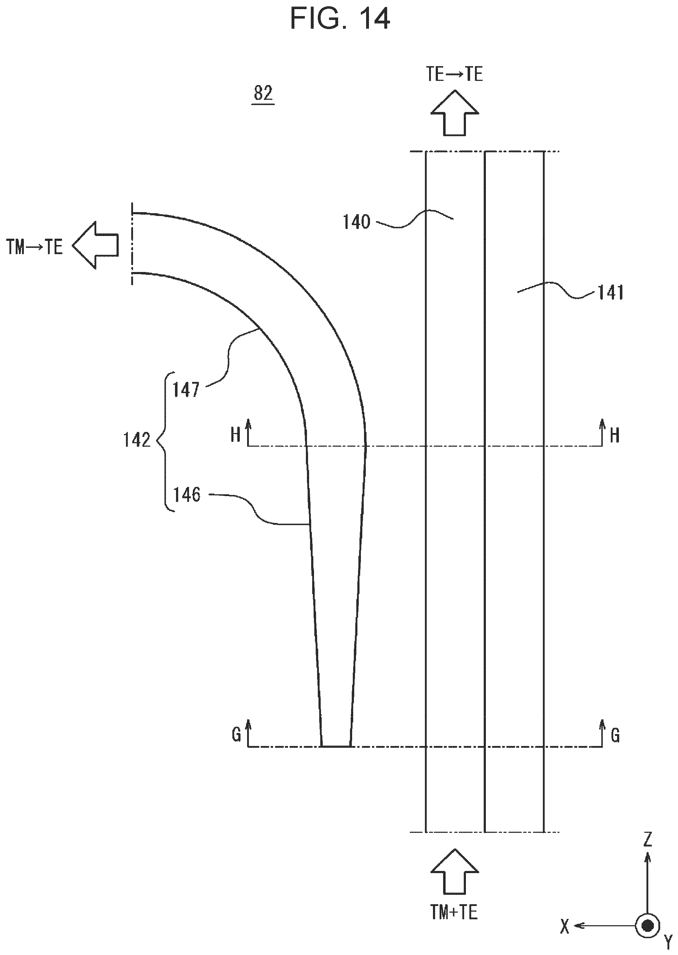

The polarization splitter rotator 82 may be configured as illustrated in FIGs. 14, 15, and 16. The first part 146 of the second waveguide 142 may be configured so that the line width thereof is not constant. The first part 146, for example, may be configured to have a tapered shape that becomes narrower on the side where the first port 143 is located and becomes wider on the side connected to the second part 147. The first part 146 may be configured as an adiabatic tapered waveguide.

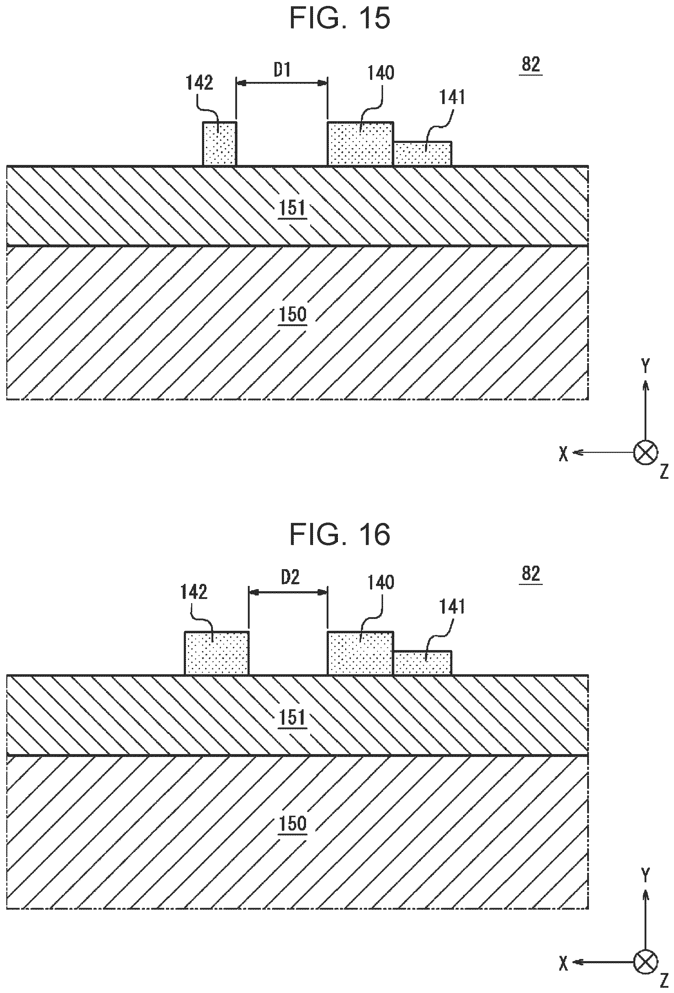

FIG. 15 illustrates a cross-section of the side of the first part 146 near the first port 143 and a cross-section of the first waveguide 140. FIG. 16 illustrates a cross-section of the side of the first part 146 far from the first port 143 and a cross-section of the first waveguide 140. A distance D1 between the first waveguide 140 and the second waveguide 142 on the side near the first port 143 may be longer than a distance D2 between the first waveguide 140 and the second waveguide 142 on the side far from the first port 143. In other words, the width of at least one of the first waveguide 140 or the second waveguide 142 in a direction intersecting the first direction (the Z-axis direction in FIG. 14) may vary in at least part of the waveguide along the first direction. The distance from the position of the cross-section in FIG. 15 to the position of the cross-section in FIG. 16 may be set to, for example, several tens of µm (micrometers). The widths of the first waveguide 140 and the second waveguide 142, or the distances D1 and D2, may be set to several hundred nanometers (nm), for example.

The second waveguide 142 may be configured to rotate the TM-mode polarization separated from the first waveguide 140 and output the rotated polarization as the TE-mode polarization from the third port 145.

The first waveguide 140 and the second waveguide 142 may be formed to include silicon. The first waveguide 140 and the second waveguide 142 may be formed on the silicon substrate 150. Since the waveguides are formed using silicon, elements including the polarization splitter rotator 82 can be easily manufactured using silicon processes. The first waveguide 140 and the second waveguide 142 may be formed to include not only silicon but also various other dielectric materials.

In an embodiment, the polarization splitter rotator 82 may include an asymmetrical directional coupler structure. The polarization splitter rotator 82 may be configured such that the first waveguide 140, which includes input/output ports on both sides, has an asymmetrical shape, and the second waveguide, which has an input/output port on one side and branches from or merges with the first waveguide 140, has a symmetrical shape. In other words, the polarization splitter rotator 82 may include a cross-output port designed as a symmetrical waveguide. Configuring the polarization splitter rotator 82 in this manner allows the width of the asymmetrically shaped waveguide to be increased. For example, the width of an asymmetrically shaped waveguide can be 300 nanometers (300 nm) or more. As a result, the polarization splitter rotator 82 can have a structure that can be manufactured in a commercial foundry. The term "commercial foundry" may refer to any foundry capable of mass production, regardless of scale.

The dimensions or shapes of elements mass-produced at commercial foundries have manufacturing tolerances. As a structure for relaxing manufacturing tolerances, the width of a waveguide with a symmetrical shape may be designed to be non-constant. Thus, the element has a structure that is robust against manufacturing tolerances.

In an embodiment, in the polarization splitter rotator 82, the line width of the first waveguide 140 having an asymmetrical shape and the linewidth of the second waveguide 142 having a symmetrical shape may be made larger than 200 nanometers (200 nm) even at narrow points. In addition, the distance between the first waveguide 140 and the second waveguide 142 may be made larger than 200 nanometers (200 nm) even at narrow points. In this case as well, the element has a structure that is robust against manufacturing tolerances. If the line width or spacing of the waveguides is made larger than 200 nanometers at the narrow points, the waveguides can be manufactured using a 180 nanometer (180 nm) process. In general, elements are easier to manufacture from a technical point of view and have lower manufacturing costs with 180 nm width processes than with state-of-the-art processes. Therefore, if the line width or spacing of the waveguides is made larger than 200 nanometers even at narrow points, an increase in element manufacturing yield or a reduction in manufacturing costs can be realized.

In an embodiment, in the polarization splitter rotator 82, the asymmetrically shaped first waveguide 140 is configured to include input/output ports on both sides, and consequently robustness may be ensured even when the line widths of the first waveguide 140 and the second waveguide 142 are increased.

As discussed above, a polarization splitter rotator 82 having a simple structure can be realized by using an asymmetrical directional coupler structure. In addition, the polarization splitter rotator 82 can be manufactured in commercial foundries by designing the polarization splitter rotator 82 so that the width of a symmetrically shaped waveguide is not constant.

Although embodiments of the present disclosure have been described based on the drawings and examples, please note that one skilled in the art can make various variations or changes based on the present disclosure. Please note that, therefore, these variations or changes are included within the scope of the present disclosure. For example, the functions and so on included in each constituent part can be rearranged in a logically consistent manner, and multiple constituent parts and so on can be combined into one part or divided into multiple parts. Please understand that the scope of the present disclosure also includes these forms.

In the present disclosure, "first", "second", and so on are identifiers used to distinguish between such configurations. Regarding the configurations, "first", "second", and so on used to distinguish between the configurations in the present disclosure may be exchanged with each other. For example, identifiers "first" and "second" may be exchanged between the first waveguide 140 and the second waveguide 142. Exchanging of the identifiers takes place simultaneously. Even after exchanging the identifiers, the configurations are distinguishable from each other. The identifiers may be deleted. The configurations that have had their identifiers deleted are distinguishable from each other by symbols. Just the use of identifiers such as "first" and "second" in this disclosure is not to be used as a basis for interpreting the order of such configurations or the existence of identifiers with smaller numbers.

In the present disclosure, the X-axis, the Y-axis, and the Z-axis are provided for convenience of explanation and may be interchanged with each other. The configurations of the present disclosure have been described using a Cartesian coordinate system consisting of the X-axis, the Y-axis, and the Z axis. The positional relationship between configurations in the present disclosure is not limited to a Cartesian relationship.

In an embodiment, (1) an optical integrated circuit element includes a first waveguide and a second waveguide. At least part of the first waveguide and at least part of the second waveguide are positioned alongside each other along a first direction. The first waveguide includes a first port configured to allow input or output of electromagnetic waves that include a first polarization and a second polarization, and a second port configured to allow output of the first polarization that has been separated or input of the first polarization. The second waveguide includes a third port configured to allow output of the second polarization that has been separated or the second polarization that has been separated and rotated, or input of the second polarization. A cross-sectional shape, a normal to which is the first direction, of at least one of the first waveguide or the second waveguide does not have linear symmetry.
(2) In the optical integrated circuit element of (1) above, a cross-sectional shape, a normal to which is the first direction, of the first waveguide may be asymmetrical.
(3) In the optical integrated circuit element of (1) or (2) above, a width, in a direction intersecting the first direction, of at least one of the first waveguide or the second waveguide may vary in at least part of the waveguide along the first direction.
(4) In the optical integrated circuit element of any one of (1) to (3) above, the first waveguide and the second waveguide may be formed to include silicon.
(5) In the optical integrated circuit element of any one of (1) to (4) above, a line width of each of the first waveguide and the second waveguide may be greater than 200 nm.

### REFERENCE SIGNS

1 optical receiver (81: input unit, 82: polarization splitter rotator (PSR), 822: polarization splitter (PS), 83: demultiplexer (DEMUX), 84: delayer, 85: variable optical attenuator (VOA))
10 photodiode
50 substrate
140 first waveguide (141: asymmetrical part, 143: first port, 144: second port)
142 second waveguide (145: third port, 146: first part, 147: second part)
150 substrate (151: insulating layer)

## Claims

1. An optical integrated circuit element comprising:
a first waveguide; and a second waveguide,
wherein at least part of the first waveguide and at least part of the second waveguide are positioned alongside each other along a first direction,
the first waveguide includes a first port configured to allow input or output of electromagnetic waves that include a first polarization and a second polarization, and a second port configured to allow output of the first polarization that has been separated or input of the first polarization,
the second waveguide includes a third port configured to allow output of the second polarization that has been separated or the second polarization that has been separated and rotated, or input of the second polarization, and
a cross-sectional shape, a normal to which is the first direction, of at least one of the first waveguide or the second waveguide does not have linear symmetry.

2. The optical integrated circuit element according to claim 1, wherein a cross-sectional shape, a normal to which is the first direction, of the first waveguide is asymmetrical.

3. The optical integrated circuit element according to claim 1, wherein a width, in a direction intersecting the first direction, of at least one of the first waveguide or the second waveguide changes in at least part thereof along the first direction.

4. The optical integrated circuit element according to any one of claims 1 to 3, wherein the first waveguide and the second waveguide are formed to include silicon.

5. The optical integrated circuit element according to claim 4, wherein a width of each of the first waveguide and the second waveguide is greater than 200 nm.
